# EUROPÄISCHE PATENTSCHRIFT

(11) **EP 2 164 700 B1**
(45) Veröffentlichungstag und Bekanntmachung des Hinweises auf die Patenterteilung: **26.02.2014**
(21) Anmeldenummer: 08760454.2
(22) Anmeldetag: 04.06.2008
(51) Int. Cl.: B32B 21/00, B44C 5/04, B44C 3/02

(54) **VERFAHREN ZUR HERSTELLUNG EINER LAMINIERTEN DEKORPLATTE**
METHOD FOR THE PRODUCTION OF A LAMINATED DECORATIVE PLATE
PROCÉDÉ DE FABRICATION D'UN PANNEAU DE DÉCORATION LAMINÉ

(30) Priorität: 04.06.2007 DE 102007026170
(43) Veröffentlichungstag der Anmeldung: 24.03.2010
(60) Teilanmeldung: 12186017.5
(73) Patentinhaber: Surface Technologies GmbH & Co. KG, 15837 Baruth (DE)
(72) Erfinder: BUHLMANN, Carsten, 15834 Rangsdorf (DE)
(74) Vertreter: Michalski Hüttermann & Partner Patentanwälte
(86) Internationale Anmeldenummer: PCT/EP2008/056871
(87) Internationale Veröffentlichungsnummer: WO 2008/148771

(56) Entgegenhaltungen:
- EP-A2- 1 977 909
- WO-A-03/095202
- DE-A1- 2 501 625
- DE-A1- 2 719 769
- DE-U1- 20 315 676
- US-A- 3 654 044

## Beschreibung

Die Erfindung betrifft ein Verfahren zur Herstellung einer laminierten Dekorplatte.

Gattungsgemäße Dekorplatten sind beispielsweise aus der WO 03/095202 A1 bekannt. Sie bestehen aus einem plattenförmigen Kern aus einem Faserwerkstoff, der auf einer Seite eine harzhaltige Zwischenlage, eine Dekorschicht und eine mit einem Relief versehene Deckschicht, auf der anderen Seite eine Gegenzugschicht aufweist. Die Dekorschicht stellt eine grafische Abbildung der Oberfläche eines limitierten Werkstoffs dar. Dabei muss das Relief der Deckschicht passgenau über dem Muster der Dekorschicht angeordnet sein. Dies wird erreicht, indem die üblicherweise aus einem bedruckten Papier bestehende Dekorschicht vorzugsweise ohne Kleberimprägnierung auf die Zwischenlage aufgelegt wird, wodurch eine Änderung in der Abmessung gegenüber dem Reliefstempel für die Deckschicht vermieden wird.

Dabei wird die harzhaltige Zwischenlage vor der Heißverpressung als feste Beschichtung auf dem Kern oder als separate vorgefertigte Klebeschicht ausgebildet. Der Klebergehalt dieser Schicht muss dann je nach der Saugfähigkeit der angrenzenden Schichten während der Heißverpressung bemessen werden. Außerdem ist es notwendig, das bedruckte Dekorpapier vor der Heißverpressung zuzuschneiden und paasgenau auf die vorbereitete Kernplatte zu legen.

US 3654044 offenbart eine laminierte Dekorplatte mit einem Sperrholzkern, auf welchen mittels eines Klebstoffes eine Dekorpapier aufgebracht ist. Das Dekorpapier ist dabei sehr dünn und zeigt eine simulierte Holzmaserung. Das Dekorpapier wird mit einer transparenten Harzschicht abgedeckt, in welche eine, eine Holzmaserung simulierende Struktur eingebracht ist.

DE2719769 offenbart ein Verfahren zur Kaschierung von Flächen, insbesondere Platten mit Deckfurnieren, Folien, imprägnierten Papieren etc., in dem auf mindestens einer zu verklebenden Fläche aufgetragener, gegebenenfalls gestreckter Harnstoffleim durch Anwendung von Druck, gegebenenfalls erhöhter Temperatur ausgehärtet wird.

WO 03/095202 A1 betrifft eine direkt laminierte Platte die durch Heißverpressung eines Kerns mit saugfähigen harzimprägnierten Schichten hergestellt wird, mit wenigstens einer Plattenfläche die eine Dekorschicht mit einer grafischen Abbildung der Oberfläche eines imitierten Werkstoffes aufweist sowie mit einer auf der Dekorschicht aufgebrachten harzimprägnierten transparenten Deckschicht mit einer reliefartigen Nachbildung einer Oberflächenstruktur des imitierten Werkstoffes, wobei zwischen der Dekorschicht und dem Kern eine harzhaltige Zwischenlage vorgesehen ist.

Die EP1977909 A2 offenbart ein Verfahren zum Herstellen einer Bauplatte mit einem Kern aus einem Holzwerkstoff, insbesondere MDF oder HDF, und einer auf einer Oberseite aufgebrachten Dekorschicht aus bedrucktem Papier, indem zunächst auf den Kern eine Harzschicht aufgebracht wird, auf die Harzschicht die trockene Dekorschicht aus nicht imprägniertem Papier aufgelegt, auf die Dekorschicht eine Imprägnierharzschicht aufgebracht wird und anschließend dieser Aufbau unter Druck und erhöhter Temperatur miteinander verpresst wird., wobei die Harzschichtauf den Kern flüssig aufgetragen und vor dem Auflegen des Dekorpapiers nur soweit getrocknet wird, dass das Harz in der Lage ist, von der Rückseite in das Dekorpapier einzupenetrieren.

DE2501625 offenbart ein Sperrholz mit simulierter Holzmaserung, welches aus einem Kern und einem darauf aufgebrachten dekorativen Papier gebildet ist, auf welches eine Harzüberzug aufgebracht wird, in den Vertiefungen als Struktur eingebracht sind.

Die Erfindung stellt sich die Aufgabe, ein Verfahren zur Herstellung einer laminierten Dekorplatte anzugeben, das einfacher und kostengünstiger ist.

Diese Aufgabe wird durch ein Verfahren nach Anspruch 1 gelöst.

Es wurde nämlich gefunden, dass eine gesonderte Herstellung der harzhaltigen Zwischenlage nicht mehr notwendig ist, wenn ein flüssiger, durch Druck und/oder wärme aushärtbarer Leim verwendet wird. Dieser Leim wird im gleichen Arbeitsgang aufgetragen, bei dem die Dekorschicht und gegebenenfalls die Deckschicht angebracht werden. Ein zuschneiden der Dekorschicht ist überflüssig, da die Passgenauigkeit mit üblichen Maßnahmen der Drucktechnik gewährleistet werden kann. Dadurch ergibt sich eine wesentliche Vereinfachung und Kostensenkung des Herstellungsverfahrens.

Die Saugfähigkeit des Kerns und der Dekorschicht kann nun unmittelbar im Herstellungsprozess über den Leimauftrag berücksichtigt werden. Eine Vorratshaltung speziell beschichteter Kern- oder Zwischenlagematerialien ist unnötig.

Der flüssige, durch Druck und/oder Wärme aushärtbare Leim ist bevorzugt ein Harnstoff-Formaldehydleim. Solche Leime werden gewöhnlich als Zweikomponentensystem geliefert und unmittelbar vor der Anwendung gemischt. Sie können durch Erwärmen gehärtet werden. Bestimmte Produkte härten aber auch bereits bei Umgebungstemperatur unter Druck hinreichend aus, um die Dekorschicht zu fixieren. Ein geeignetes Produkt ist beispielsweise Adhesive 1206 mit Härter 2547 der Firma Casco Adhesives, Stockholm, Schweden.

Ein ebenfalls bevorzugter Leim ist Melamin-Formaldehydleim. Es ist vorteilhaft und dient der Vereinfachung des Herstellungsverfahrens, wenn hierzu das gleiche Produkt wie für die Herstellung der Deckschicht verwendet wird. Brauchbar sind auch Melamin-Harnstoff-Formaldehydleime.

In einer bevorzugten Ausführungsform ist die Deckschicht zellulosefrei ausgebildet. Sie enthält insbesondere keine zellulosefaserhaltigen Trägerschichten wie Papier oder dergleichen. Bevorzugte Materialien für die Deckschicht sind Melaminharze oder Acryllacke. Auch PVC ist brauchbar. In diese Deckschichtmaterialien lassen sich feine Pulver harter Feststoffe inkorporieren, wodurch die Abriebfestigkeit erhöht wird. Hierzu eignet sich beispielsweise Korund.

Zellulosefreie Deckschichten haben den Vorteil höherer Transparenz. Außerdem sind sie einfacher und kostengünstiger herzustellen, weil kein faserhaltiges Trägermaterial benötigt wird und dessen gesonderte Imprägnierung wegfällt.

Die Deckschicht wird in Form einer Folie aus thermoplastischem Material oder auch als Flüssigkeit auf die Dekorschicht aufgetragen werden.

Als Dekorschicht besonders bevorzugt wird bedrucktes Papier. Die bedruckte Seite kann mit einem dünnen Lackfilm überzogen sein, der jedoch die Papierschicht nicht imprägniert und deren Maße nicht verändert.

Als Kernmaterial eignen sich Faserwerkstoffe wie Faserplatten hoher (HDF) oder mittlerer Dichte (MDF) oder auch Spanplatten. Besonders bevorzugt ist HDF.

Wenn die Dekor- und die Deckschicht nur auf einer Seite des Kerns vorhanden sind, ist es zweckmäßig, auf der anderen Seite eine sogenannte Gegenzugschicht anzubringen, um ein Verziehen oder eine Krümmung der fertigen Platte infolge von Temperatur- oder Feuchtigkeitseinflüssen zu verhindern. Die Dicke dieser Schicht ist auf die Beschichtung der anderen Seite abzustimmen. Für die Schicht geeignet ist beispielsweise ein neutrales Papier mit einem festen oder flüssigen Harz als Leim. Das erfindungsgemäße Verfahren ist im Vergleich zum Stand der Technik einfacher, weil es in einem oder im zwei Arbeitsgängen ausführbar ist. Das Auftragen des flüssigen, unter Druck und/oder Wärme aushärtenden Leims, das Auflegen und Aufpressen der Dekorschicht und gegebenenfalls das Anbringen des Gegenzugs wird in einem Arbeitsgang als Kaschierverfahren ausgeführt und danach wird die Deckschicht in einem zweiten Arbeitsgang als flüssige Schicht oder Folie aufgebracht und die gesamte Schichtstruktur dann unter Druck und Wärme ausgehärtet, wobei gleichzeitig in der Oberfläche der Deckschicht durch ein geeignet ausgebildetes Presswerkzeug die Reliefstruktur geformt wird. Im ersten Arbeitsgang kann man dabei ohne Anwendung von Wärme arbeiten. Der zweite Arbeitsgang kann sich unmittelbar an den ersten anschließen, so dass ein kontinuierliches Arbeiten möglich ist. Im ersten Arbeitsgang kann beispielsweise eine Kalanderpresse verwendet werden, die mit geeigneten Zuführungsvorrichtungen für das Kernmaterial und die Dekorschicht sowie gegebenenfalls das Gegenzugmaterial und mit Auftragsvorrichtungen für den flüssigen Leim versehen ist. Nach dem Kalandrieren kann die Platte gegebenenfalls getrennt und in einer Kurztaktpresse mit der Deckschicht versehen und unter Druck und Wärme ausgehärtet werden. Dieser zweite Arbeitsgang kann auch in einer beheizten Doppelbandpresse kontinuierlich ausgeführt werden, wobei die Platte danach nach Bedarf getrennt werden kann.

Das Presswerkzeug (z.B. Platte oder Walze) zur Formung des Oberflächenreliefs kann auf das Muster der Dekorschicht ausgerichtet werden, beispielsweise mittels photoelektrisch gelesener Passmarken auf der Dekorschicht. Dadurch wird die Imitation eines Werkstoffs, bei dem Oberflächenporen und sichtbares Muster korreliert sind, z.B. Holz, verbessert. Es kann auch kontinuierlich gearbeitet werden, weil die Dekorschicht nicht mehr zugeschnitten und ggf. manuell auf den Kern aufgelegt zu werden braucht.

Selbstverständlich kann das Produkt nach dem ersten Arbeitsgang ggf. auch zwischengelagert werden.

Die mit dem erfindungsgemäßen Verfahren hergestellte Dekorplatte lässt sich auch mit besonders tiefen Oberflächenstrukturen herstellen, wenn die Zwischenschicht beim Prägen noch nachgiebig ist und/oder die Dicke der Deckschicht geeignet gewählt wird.

Das erfindungsgemäße Verfahren benötigt auch kein besonders hochwertiges Druckbasispapier für die Dekorschicht, um eine gute Ausrichtung von graphischem Muster und Oberflächenrelief zu erreichen.

Im Folgenden werden zwei Ausführungsbeispiele für erfindungsgemäße Verfahren angegeben.
A) Schichtaufbau der Dekorplatte mit einem
   Harnstofformalde-hydleim (von oben nach unten):
   1) Flüssig aufgetragene Deckschicht aus Melaminharz In der Deckschicht ist Korund eingebettet, welches abriebhemmend wirkt.
   2) Gedrucktes Dekorpapier entweder trocken (d.h. nicht imprägniert) oder als Finishfolie mit einem dünnen Lackfilm beschichtet.
   3) Schicht mit Harnstofformaldehydleim.
   4) HDF-Platte
   5) Schicht mit Harnstofformaldehydleim.
   6) Gegenzugpapier zum Abdecken der unteren Leimschicht (optional notwendig).

   Beim Verfahren zur Herstellung dieser Platte werden die Schichten von 2) bis 6) in einem Kaschierverfahren miteinander fest verklebt. Die Schicht 1 wird anschließend in einer Kurztaktpresse oder in einer kontinuierlich arbeitenden Doppelbandpresse in das Dekorpapier eingepresst, wobei ein Teil der abriebfesten Melaminschicht die Oberfläche verschließt. Bei diesem Vorgang wird auch eine Reliefstruktur mit eingepresst.
B) Schichtaufbau einer Dekorplatte mit Flüssigmelamin als verbindende Harzleimschicht (von oben nach unten):
   1) Flüssig aufgetragene Deckschicht aus Melaminharz. In dieser ist Korund eingebettet, welches abriebhemmend wirkt.
   2) Gedrucktes Dekorpapier: Dieses Dekorpapier ist trocken, jedoch kann beim Pressen Melaminharz von unten und oben in das Papier eindringen.
   3) Flüssig aufgetragene Schicht aus Melamin.
   4) HDF-Platte
   5) Eine Gegenzugschicht wie unter A) Punkt 5 und 6 beschrieben.

Beim Verfahren zur Herstellung dieser Platte ist es möglich, in nur einem Arbeitsgang trockenes Dekorpapier auf einer Trägerplatte (z.B. HDF-Platte) aufzupressen, indem die oben aufgeführten Schichten 2. bis 5. in einem ersten Teilschritt kalt zwischen 2 Kalanderwalzen angepresst bzw. aufgelegt und anschließend in einer Kurztaktpresse oder in einer kontinuierlich arbeitenden Doppelbandpresse unter der Einwirkung von Wärme und Druck miteinander verpresst werden. Der Arbeitsgang "Imprägnierung" ist bei diesem Vorgang nicht mehr notwendig.

## Patentansprüche

1. Verfahren zur Herstellung einer laminierten Dekorplatte, umfassend die Schritte
a) Bereitstellen einer Platte aus einem Faser- oder Spanwerkstoff, die den Kern der Dekorplatte bildet
b) Beschichten der Platte auf mindestens einer Seite mit einem flüssigen, durch Druck und/oder Wärme aushärtbaren Leim,
c) Aufpressen einer nicht mit Harz imprägnierten Dekorschicht auf die Schicht des Leims,
d) Aufbringen einer Deckschicht in Form einer Folie aus thermoplastischem Material oder als Flüssigkeit auf die Dekorschicht,
e) Pressen und Erhitzen der so gebildeten Schichtstruktur unter Ausbildung der Oberflächenstruktur der Deckschicht, wobei das Deckschichtmaterial in die Dekorschicht eingepresst wird,
**dadurch gekennzeichnet, dass** die Schritte a) bis c) in einem Arbeitsgang als Kaschierverfahren ausgeführt werden.

2. Verfahren nach einem der vorherigen Ansprüche, **dadurch gekennzeichnet, dass** als Dekorschicht ein bedrucktes Papier verwendet wird.

3. Verfahren nach einem der vorherigen Ansprüche, **dadurch gekennzeichnet, dass** im Schritt e) das Presswerkzeug auf das Muster der Dekorschicht ausgerichtet wird, sodass Oberflächenporen und sichtbares Muster korreliert sind.

4. Verfahren nach einem der vorhergehenden Ansprüche, aufweisend den Schritt
f) Anbringen einer Gegenzugschicht auf der anderen Seite des Kerns.

5. Verfahren nach Anspruch 4, **dadurch gekennzeichnet, dass** die Schritte a) bis c) und f) gleichzeitig als Kaschierverfahren unter Druck ausgeführt werden.

6. Verfahren nach einem der vorangehenden Ansprüche, **da-durch gekennzeichnet**, dass die Schritte a) bis c) und f) unter Verwendung eines Harnstoff-Formaldehydleims oder eines Melamin-Formaldehydharzes als Leim unter Anwendung von Druck ausgeführt werden.

7. Verfahren nach einem der Ansprüche 1 bis 6, **dadurch gekennzeichnet, dass** die Schritte d) und e) unter Verwendung eines flüssigen Melamin-Formaldehydharzes als Deckschichtmaterial in einer Kurztaktpresse oder einer kontinuierlich arbeitenden Doppelbandpresse durchgeführt werden.

## Claims

1. Method for producing a laminated decorative board, comprising the steps of:
a) providing a board made of a fibre or particle material, which forms the core of the decorative board,
b) coating the board on at least one side with a liquid glue curable by pressure and/or heat,
c) pressing a decorative layer not impregnated with resin onto the layer of glue,
d) applying a top layer in the form of a film of thermoplastic material or as a liquid to the decorative layer,
e) pressing and heating the layer structure thus formed while forming the surface structure of the top layer, the material of the top layer being pressed into the decorative layer,
**characterized in that** steps a) to c) are performed in one operation as a lamination process.

2. Method according to one of the preceding claims, **characterized in that** printed paper is used as the decorative layer.

3. Method according to one of the preceding claims, **characterized in that**, in step e), the pressing tool is aligned with the pattern of the decorative layer, so that surface pores and the visible pattern are correlated.

4. Method according to one of the preceding claims, having the step of
f) applying a counteracting layer to the other side of the core.

5. Method according to Claim 4, **characterized in that** steps a) to c) and f) are performed simultaneously as a lamination process under pressure.

6. Method according to one of the preceding claims, **characterized in that** steps a) to c) and f) are performed while applying pressure, using a ureaformaldehyde glue or a melamine-formaldehyde resin as a glue.

7. Method according to one of Claims 1 to 6, **characterized in that** steps d) and e) are performed in a short-cycle press or in a continuously operating double-belt press using a liquid melamine-formaldehyde resin as the material of the top layer.

## Revendications

1. Procédé de production d'un panneau décoratif stratifié, comprenant les étapes de
a) mise à disposition d'un panneau en un matériau à base de fibres ou de copeaux, qui forme le noyau du panneau décoratif
b) revêtement du panneau sur au moins une face par une colle liquide, durcissable sous l'effet de la pression et/ou de la chaleur,
c) pressage d'une couche décorative non imprégnée de résine sur la couche de colle,
d) application d'une couche de recouvrement sous forme d'une feuille en matériau thermoplastique ou sous forme de liquide sur la couche décorative,
e) pressage et chauffage de la structure à couches ainsi formée en formant la structure de surface de la couche de recouvrement, le matériau de la couche de recouvrement étant pressé dans la couche décorative,
**caractérisé en ce que** les étapes a) à c) sont réalisées dans un cycle de travail en tant que procédé de contrecollage.

2. Procédé selon l'une quelconque des revendications précédentes, **caractérisé en ce qu'**on utilise, comme couche décorative, un papier imprimé.

3. Procédé selon l'une quelconque des revendications précédentes, **caractérisé en ce que** dans l'étape e), l'outil de pressage est aligné sur le motif de la couche décorative, de telle sorte que les pores de surface et le motif visible soient en corrélation.

4. Procédé selon l'une quelconque des revendications précédentes, présentant l'étape
f) application d'une contrecouche de traction sur l'autre face du noyau.

5. Procédé selon la revendication 4, **caractérisé en ce que** les étapes a) à c) et f) sont réalisées simultanément en tant que procédé de contrecollage sous pression.

6. Procédé selon l'une quelconque des revendications précédentes, **caractérisé en ce que** les étapes a) à c) et f) sont réalisées en utilisant une colle urée-formaldéhyde ou une résine mélamine-formaldéhyde comme colle en utilisant de la pression.

7. Procédé selon l'une quelconque des revendications 1 à 6, **caractérisé en ce que** les étapes d) et e) sont réalisées en utilisant une résine de mélamine-formaldéhyde liquide comme matériau de couche de recouvrement dans une presse à cycle rapide ou une presse à double bande fonctionnant en continu.
